Europäisches Patentamt

European Patent Office

Office européen des brevets

(11) Veröffentlichungsnummer : **0 102 315**
**B1**

(12) # EUROPÄISCHE PATENTSCHRIFT

(45) Veröffentlichungstag der Patentschrift :
27.07.88

(21) Anmeldenummer : 83730029.2

(22) Anmeldetag : 16.03.83

(51) Int. Cl.⁴ : **G 05 D 23/24, B 23 K 3/04**

(54) **Schaltungsanordnung zur Regelung der Betriebstemperatur des Heizkörpers eines elektrischen Lötgerätes, insbesondere Lötkolbens.**

(30) Priorität : 28.07.82 DE 3228202

(43) Veröffentlichungstag der Anmeldung :
07.03.84 Patentblatt 84/10

(45) Bekanntmachung des Hinweises auf die Patenterteilung : 27.07.88 Patentblatt 88/30

(84) Benannte Vertragsstaaten :
AT BE CH FR IT LI NL

(56) Entgegenhaltungen :
FR-A- 2 393 363
US-A- 3 518 407
US-A- 3 546 436
US-A- 3 924 102

(73) Patentinhaber : ERSA Ernst Sachs KG GmbH & Co.
Leonhard-Karl-Strasse 24
D-6980 Wertheim / Main (DE)

(72) Erfinder : Bernard, Jürgen, Dipl.-Ing. (FH)
Rohrbrunner Strasse 19
D-8771 Schollbrunn (DE)

(74) Vertreter : Lüke, Dierck-Wilm, Dipl.-Ing.
Gelfertstrasse 56
D-1000 Berlin 33 (DE)

EP 0 102 315 B1

## Beschreibung

Die Erfindung bezieht sich auf eine Schaltungsanordnung zur Regelung der Betriebstemperatur des Heizkörpers eines elektrischen Lötgerätes, insbesondere Lötkolbens, wobei der Heizkörper als Heizelement und als Meßelement zur Temperaturregelung verwendet wird.

Es ist aus der DE-A1-28 47 482 bekannt, bei einem Lötgerät in Form eines Lötkolbens das Heizelement in Verbindung mit einer elektronischen Regeleinrichtung auch als Temperaturfühler zu verwenden. Eine Ausführungsform einer verwendbaren elektronischen Regeleinrichtung ist hieraus jedoch nicht vorbekannt.

Es sind ferner aus der US-A-3 546 436 und der US-A-3 924 102 gattungsfremde Schaltungsanordnungen zur Regelung der Betriebstemperatur eines beheizten elektrischen Gerätes, wie z. B. einer Kochplatte oder einer Waschmaschine, bekannt. Diese Schaltungsanordnungen sind bei elektrischen Lötgeräten, insbesondere elektrischen Lötkolben, jedoch nicht verwendbar, da auftretende Spannungsänderungen der Versorgungsspannung nicht kompensiert werden können.

Der Erfindung liegt von daher die Aufgabe zugrunde, eine Schaltungsanordnung der gattungsgemäßen Art zu schaffen, bei welcher mit möglichst geringem schaltungstechnischen Aufbau und unter Verwendung des Heizelementes gleichzeitig als Meßelement zur Temperaturregelung auftretende Spannungsänderungen der Versorgungsspannung kompensiert werden können.

Die Lösung dieser Aufgabe ergibt sich aus den kennzeichnenden Merkmalen des Anspruches 1.

Die erfindungsgemäße Schaltungsanordnung läßt sich mit geringem technischen Aufwand herstellen und benötigt insbesondere keinen Wärmefühler im Bereich der Lötspitze bzw. des Heizkörpers des elektrischen Lötgerätes. Im Heizstromkreis des Heizkörpers sind lediglich der Meßwiderstand und das Triac-Schaltelement eingeschaltet, das insbesondere in Abhängigkeit vom Spannungsabfall am Meßwiderstand aufgeschaltet wird.

Als Heizkörper kann eine Heizwicklung oder ein Keramikheizelement dienen. Wesentlich ist, daß der Heizkörper ein PTC-Verhalten oder gegebenenfalls auch ein NTC-Verhalten aufweist. Der erfindungsgemäß zu verwendende Heizkörper hat ein Kalt/Heiß-Verhältnis von beispielsweise 4 : 1, wohingegen herkömmliche verwendete Heizkörper, z. B. bei Lötkolben, ein solches Verhältnis von 1 : 1 aufweisen, d. h. keinen meßbaren Temperaturkoeffizienten besitzen.

Wesentlich bei vorliegender Erfindung ist, daß die Schaltungsanordnung ein ständiges Umschalten zwischen Messen und Heizen durchführt, wobei der vorhandene Heizkörper gleichzeitig als Temperaturmeßelement ausgenutzt wird, d. h. es liegt eine Doppelnutzung des Heizkörpers vor.

Weitere vorteilhafte Ausgestaltungen der Erfindung ergeben sich aus den Unteransprüchen.

Hingewiesen wird insbesondere auf die Unteransprüche 2 bis 4, aus denen die vorteilhafte Regelung der Schaltungsanordnung mittels dreier Meßspannungen hervorgeht, nämlich dem Spannungsabfall am Meßwiderstand, der Vorgabespannung am Spannungsteiler und der Ausgangsspannung des Integrationskondensators, der zugleich ein Zeitglied zum Nachheizen des Heizkörpers bildet.

Die Erfindung is nachfolgend anhand eines in den Zeichnungen dargestellten Ausführungsbeispieles einer Anordnung zur Regelung der Betriebstemperatur der Heizwicklung eines elektrischen Lötkolbens näher erläutert. Es zeigen :

Fig. 1 ein Blockschaltbild und
Fig. 2 ein Schaltbild der Anordnung.

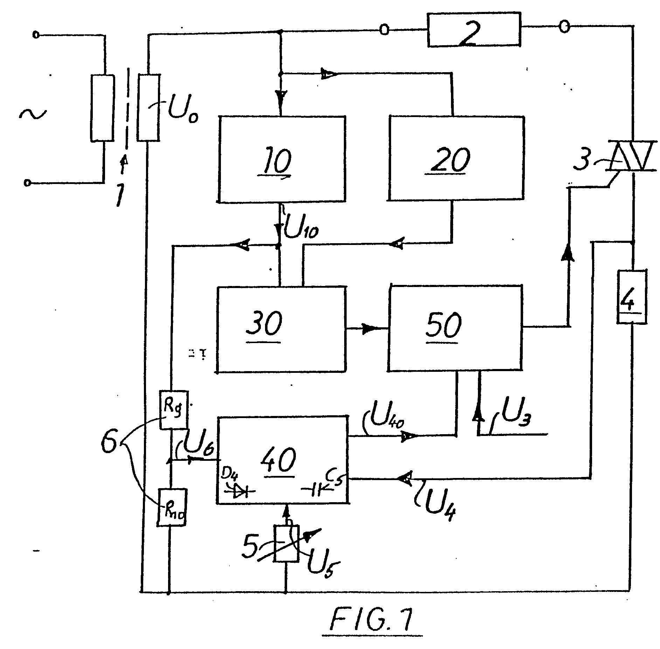

Das Blockschaltbild gemäß Fig. 1 zeigt eine Heizstromkreis-Reihenschaltung aus der Sekundärseite eines Netztransformators 1 für die Spannungsversorgung, aus einer Heizwicklung 2 eines nicht gezeigten elektrischen Lötkolbens, wobei die Heizwicklung 2 ein PTC-Verhalten aufweist, aus einem als TRIAC 3 ausgebildeten Schaltelement und aus einem Meßwiderstand 4. Mit dem Heizstromkreis sind in der in Fig. 1 näher gezeigten Weise eine Gleichrichterschaltung 10, eine Nullpunkterkennungsschaltung 20, eine Impulserzeugungsschaltung 30, eine Regelverstärkerschaltung 40 mit einer Diode $D_4$ und einem Integrationskondensator $C_5$ sowie eine Komparatorschaltung 50 verknüpft. Ein Potentiometer 5 zur Temperatureinstellung der Heizwicklung 2 ist zwischen den Heizstromkreis und die Regelverstärkerschaltung 40 geschaltet. Ein Spannungsteiler 6 aus zwei hintereinandergeschalteten Widerständen $R_9$ und $R_{10}$ ist zwischen den Ausgang der Gleichrichterschaltung 10 und den Heizstromkreis geschaltet und zwischen den beiden Widerständen $R_9$, $R_{10}$ mit der Schaltung 40 verknüpft.

Die Netzspannung des Transformators 1 wird sekundärseitig auf $U_0 = 24$ V festgelegt und der Gleichrichterschaltung 10 zugeführt. Hier werden die Betriebsspannung $U_{10}$ für die Schaltungen 30, 40 und 50, die jeweils ein IC-Glied enthalten, und die Vergleichsspannung $U_3$ festgelegt, die am nichtinvertierenden Eingang der Komparatorschaltung 50 anliegt. Nach Anliegen der Netzspannung am Transformator 1 und Vorliegen der Betriebsspannung $U_{10}$ am Ausgang der Gleichrichterschaltung 10 beginnt die Impulserzeugungsschaltung 30 im 1/4-Sekundentakt hochfrequente Impulse abzugeben. Diese werden durch die Nullpunkterkennungsschaltung 20 mit dem Nulldurchgang der Wechselspannung synchronisiert. Die etwa 5 ms langen Impulse gelangen auf den Oder-Eingang des Komparators 50, welcher daraufhin das TRIAC-Schaltelement 3 ansteuert und dieses für die positive Halbwelle der Wechselspannung durchschaltet.

Während der Stromflusses durch die Heizwicklung 2 des Lötkolbens entsteht am Meßwiderstand 4 ein Spannungsabfall $U_4$. Dieser wird mit

der Spannung $U_5$ am der Temperatureinstellung der Heizwicklung 2 dienenden Potentiometer 5 und der Vorgabespannung $U_6$ am Spannungsteiler 6, welche aus der ungeregelten Betriebsspannung $U_{10}$ abgeleitet wird, in der Regelverstärkerschaltung 40 verglichen. Sobald der Spannungsabfall $U_4$ am Meßwiderstand 4 die Vorgabespannung $U_6$ übersteigt, lädt die Regelverstärkerschaltung 40 über die Diode $D_4$ den Kondensator $C_5$, der ein Zeitglied bildet, auf. Übersteigt diese Spannung $U_{40}$ die am nichtinvertierenden Eingang des Komparators 50 anliegende Vergleichsspannung $U_3$, so bleiben der Komparator 50 und auch das TRIAC-Schaltelement 3 durchgeschaltet. Folglich bleibt die Spannungsversorgung für das Heizelement 2 aufrechterhalten, so daß das Heizelement 2 eingeschaltet bleibt.

Sinkt die Spannung $U_4$ am Meßwiderstand 4 durch ansteigende Temperatur der Heizwicklung 2 mit PTC-Verhalten, so schaltet die Regelverstärkerschaltung 40 wieder ab. Der Kondensator $C_5$ wird über einen parallel geschalteten hochohmigen Widerstand $R_{18}$ entladen. Sobald die Spannung $U_{40}$ am Kondensator $C_5$ unter die Vergleichsspannung $U_3$ des Komparators 50 abfällt, schaltet dieser das TRIAC-Schaltelement 3 wieder ab. Dies hat zur Folge, daß auch die Heizwicklung 2 des Lötkolbens ausgeschaltet wird. Durch das vom Integrationskondensator $C_5$ gebildete Zeitglied entsteht eine gewisse Hysterese, die die Heizwicklung 2 des Lötkolbens etwas nachheizen läßt. Dies führt dazu, daß die eingestellte Endtemperatur schneller erreicht wird.

Von nun an gelangen wieder nur die Taktimpulse des Impulsgenerators 30 zum TRIAC-Schaltelement 3. Dieser Vorgang findet solange statt, bis der Spannungsabfall $U_4$ am Meßwiderstand 4 bei der eingestellten Temperatur wieder die Vorgabespannung $U_6$ am Spannungsteiler 6 überschreitet. Dies führt zu einer erneuten Einschaltung der Heizwicklung 2 des Lötkolbens.

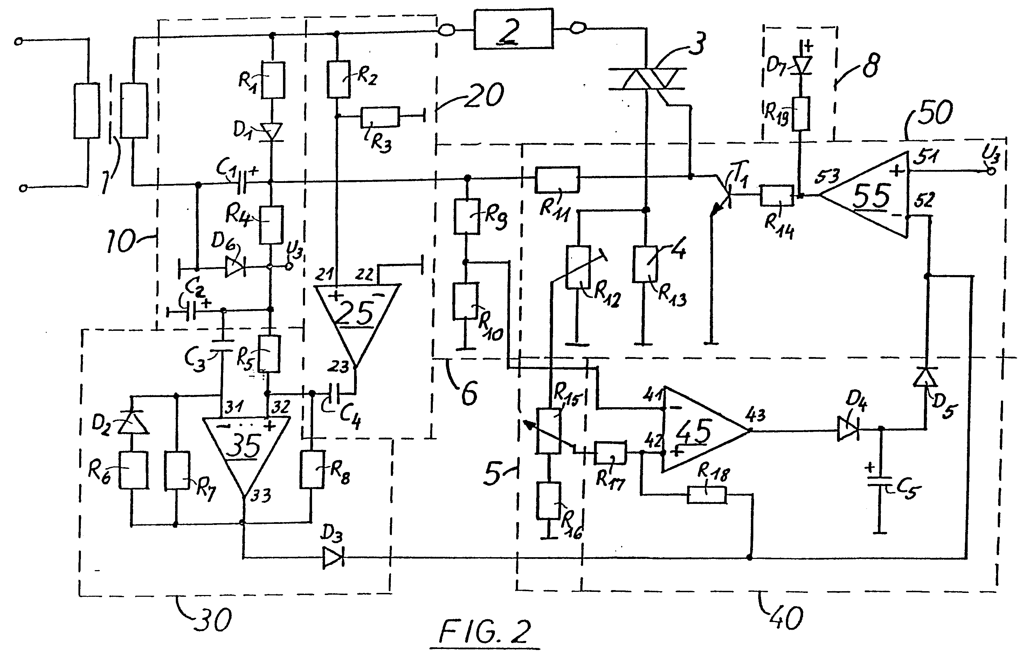

In dem gemäß Fig. 2 ausgeführten Schaltbild der Anordnung sind die Schaltungen 10, 20, 30, 40 und 50 jeweils in durch gestrichelte Linien getrennten Feldern dargestellt.

Die unmittelbar im Anschluß an den Netztransformator 1 dargestellte Gleichrichterschaltung 10 enthält in einem parallel zur Sekundärseite des Netztransformators 1 geschalteten Stromkreis in Reihe einen Widerstand $R_1$, eine Diode $D_1$, einen weiteren Widerstand $R_4$ und eine umgekehrt zur Diode $D_1$ geschaltete weitere Diode $D_6$, zu welcher zwei Kondensatoren $C_1$ und $C_2$ parallelgeschaltet sind. Zwischen dem Widerstand $R_4$ und der Diode $D_6$ wird die dem nichtinvertierenden Eingang 51 der Komparatorschaltung 50 zugeführte Vergleichsspannung $U_3$ abgegriffen.

Die Nullpunkt-Erkennungsschaltung 20 umfaßt ein IC-Glied 25, dessen n. i. Eingang 21 über einen Widerstand $R_2$ mit dem Heizstromkreis zwischen der Sekundärseite des Netztrafos 1 und der Heizwicklung 2 und dessen inv. Eingang 22 unmittelbar mit dem Heizstromkreis verknüpft ist. Ein Widerstand $R_3$ ist zwischen den Widerstand $R_2$ und den Eingang 21 geschaltet und mit dem Heizstromkreis verbunden. Der Ausgang 23 des IC-Gliedes 25 ist über einen Kondensator $C_4$ mit der Impulserzeugerschaltung 30 verbunden.

Die Impulserzeugerschaltung 30 umfaßt ein IC-Glied 35, dessen Eingänge 31 und 32 über einen Kondensator $C_3$ bzw. einen Widerstand $R_5$ mit den verknüpften Ausgängen des Widerstandes $R_4$, der Diode $D_6$ und des Kondensators $C_2$ der Gleichrichterschaltung 10 verbunden sind. Zwischen dem Eingang 32 und dem Widerstand $R_5$ sind der Kondensator $C_4$ der Nullpunkt-Erkennungsschaltung 20 und ein weiterer Widerstand $R_8$ angeschlossen, der mit dem Ausgang 33 des IC-Gliedes 35 verbunden ist. Parallel zur Verbindung zwischen den Ein- und Ausgängen 31 bzw. 33 liegt ein weiterer Widerstand $R_7$, zu welchem eine Reihenschaltung aus dem Widerstand $R_6$ und der Diode $D_2$ geschaltet ist. Der Ausgang 33 des IC-Gliedes 35 führt über eine Diode $D_3$ zum invertierenden Eingang 52 des IC-Gliedes 55 der Komparatorschaltung 50.

Die Regelverstärkerschaltung 40 umfaßt ein IC-Glied 45, dessen invertierende Eingang 41 zwischen den Widerständen $R_9$ und $R_{10}$ des Spannungsteilers 6 angeschlossen ist. Der nicht invertierte Eingang 42 ist über einen Widerstand $R_{17}$ mit dem Abgriff des Widerstandes $R_{15}$ des Potentiometers 5 zur Temperatureinstellung verbunden und über den hochohmigen Widerstand $R_{18}$ mit der Verbindungsleitung zum Eingang 52 des IC-Gliedes 55 der Komparatorschaltung 50. Der Ausgang 43 des IC-Gliedes 45 ist über zwei hintereinandergeschaltete, rückwärts sperrende Dioden $D_4$ und $D_5$ ebenfalls mit dem Eingang 52 des IC-Gliesdes 55 der Schaltung 50 verbunden. Zwischen beiden Dioden $D_4$ und $D_5$ ist der Integrationskondensator $C_5$ geschaltet, dessen anderer Anschluß am Heizstromkreis liegt. Zwischen dem Widerstand $R_{15}$ des Potentiometers 5 und dem Heizstromkreis ist ein Widerstand $R_{16}$ geschaltet.

Das IC-Glied 55 der Komparatorschaltung 50, an dessen nichtinvertierenden Eingang 51 die Vergleichsspannung $U_3$ anliegt und dessen invertierenden Eingang 52 über die rückwärts sperrenden Dioden $D_5$ und $D_4$ mit dem Ausgang 43 des IC-Gliedes 45 der Regelverstärkerschaltung 40 und gleichzeitig über die ebenfalls rückwärts sperrende Diode $D_3$ mit dem Ausgang 33 des IC-Gliedes 35 der Impulserzeugerschaltung 30 verbunden ist, ist mit seinem Ausgang 53 über einen Widerstand $R_{14}$ mit der Basis eines Transistors $T_1$ verbunden, dessen Emitter mit dem Heizstromkreis und dessen Kollektor mit einem Eingang des TRIAC-Schaltelementes 3 verbunden ist, dessen anderer Eingang über den Meßwiderstand 4 (Widerstand $R_{13}$) mit dem Heizstromkreis verbunden ist. Der Ausgang des TRIAC-Schaltelementes 3 ist mit dem Heizelement 2 direkt verbunden. Parallel zum Widerstand $R_{13}$ ist ein Widerstand $R_{12}$ geschaltet, der zur Voreinstellung des aus dem Widerstand $R_{15}$ gebildeten Potentiometers 5 vorgesehen ist. Schließlich ist der Kollektor des Transistors $T_1$ über einen Widerstand $R_{11}$ sowohl mit dem Widerstand $R_9$ des Spannungsteilers 6

als auch mit der Gleichrichterschaltung 10 zwischen der Diode $D_1$, dem Kondensator $C_1$ und dem Widerstand $R_4$ verknüpft.

Mit dem Ausgang 53 des IC-Gliedes 55 der Komparatorschaltung 50 ist über einen Widerstand $R_{19}$ noch eine Leuchtdiode $D_7$ zur Anzeige des Betriebszustandes verbunden (Schaltung 8).

## Patentansprüche

1. Schaltungsanordnung zur Regelung der Betriebstemperatur des Heizkörpers (2) eines elektrischen Lötgerätes, insbesondere Lötkolbens, wobei der Heizkörper (2) als Heizelement und als Meßelement zur Temperaturregelung verwendet wird, dadurch gekennzeichnet, daß in den an einer Wechselspannung liegenden Heizstromkreis des Heizkörpers (2) ein Meßwiderstand (4 ; $R_{13}$) zur Überwachung des durch den Heizkörper (2) fließenden Stromes und ein TRIAC-Schaltelement (3) zwischen dem Meßwiderstand (R ; $R_{13}$) und dem Heizkörper (2) eingesetzt sind, daß eine mit einem integrierten Schaltkreis (45) versehene Regelverstärkerschaltung (40) zum Vergleich des Spannungsabfalles ($U_4$) am Meßwiderstand (4 ; $R_{13}$) mit der Vorgabespannung ($U_6$) eines Spannungsteilers (6 ; $R_9,R_{10}$) vorgesehen ist, daß der Spannungsteiler (6 ; $R_9,R_{10}$) an einem ersten Ausgang ($U_{10}$) einer die Wechselspannung gleichrichtenden Gleichrichterschaltung (10) liegt, und daß das TRIAC-Schaltelement (3) von einer Komparatorschaltung (50) mittels eines Integrierten Schaltkreises (55) gesteuert wird, dessen nicht invertierender Eingang (51) mit einem zweiten, eine Vergleichsspannung liefernden Ausgang ($U_3$) der Gleichrichterschaltung (10) verbunden ist und dessen invertierender Ausgang (52) mit dem Ausgang (43,$U_{40}$) der Regelverstärkerschaltung (40) sowie mit dem Ausgang (33) einer Impulserzeugerschaltung (30) verbunden ist, wobei die Impulserzeugerschaltung (30) Impulse erzeugt, die über eine Nullpunkterkennungsschaltung (20) zum Nulldurchgang der Wechselspannung synchronisiert werden, und, solange die Ausgangsspannung ($U_{40}$) des Regelverstärkers (40) die Vergleichsspannung übersteigt, das TRIAC-Schaltelement (3) durchgeschaltet bleibt, andersfalls nur die zur Messung der Einschaltschwelle benötigten Impulse der Impulserzeugerschaltung (30) zum Steuereingang des TRIAC-Schaltelementes (33) durchgelassen werden.

2. Schaltungsanordnung nach Anspruch 1, dadurch gekennzeichnet, daß beim Erreichen bzw. Überschreiten der Vorgabespannung ($U_6$) durch den Spannungsabfall ($U_4$) ein Integrationskondensator ($C_5$) innerhalb der Regelverstärkerschaltung (40) aufgeladen wird, dessen Spannung ($U_{40}$) den Komparator (50) im Verhältnis zu einer Vergleichsspannung ($U_3$) derart steuert, daß das TRIAC-Schaltelement (3) eingeschaltet ist, solange die Spannung ($U_{40}$) am Ausgang des Integrationskondensators ($C_5$) größer ist als die Vergleichsspannung ($U_3$), und ausgeschaltet ist, solange die Spannung ($U_{40}$) am Integrationskondensator ($C_5$) kleiner als die Vergleichsspannung ($U_3$) ist.

3. Schaltungsanordnung nach Anspruch 2, dadurch gekennzeichnet, daß der Integrationskondensator ($C_5$) der Regelverstärkerschaltung (40) ein Zeitglied zur Nachheizung des Heizkörpers (2) nach dem Ausschalten des TRIAC-Schaltelementes (3) bildet.

4. Schaltungsanordnung nach einem der Ansprüche 2 und 3, dadurch gekennzeichnet, daß das Wiedereinschalten des TRIAC-Schaltelementes (3) und damit ein erneutes Aufheizen des Heizkörpers (2) nur dann erfolgen, wenn der Spannungsabfall ($U_4$) am Meßwiderstand (4 ; $R_{13}$) größer als die Vorgabespannung ($U_6$) am Spannungsteiler (6) ist und die Ausgangsspannung ($U_{40}$) des Integrationskondensators ($C_5$) die Vergleichsspannung ($U_3$) übersteigt.

5. Schaltungsanordnung nach einem oder mehreren der vorangegangenen Ansprüche, dadurch gekennzeichnet, daß Spannungsänderungen der Versorgungsspannung ($U_0$) kompensiert werden, die einen veränderten Strom durch den Heizkörper (2) zur Folge haben, woraus ein veränderter Strom und ein Spannungsabfall ($U_4$) am Meßwiderstand (4 ; $R_{13}$) folgen.

6. Schaltungsanordnung nach einem der vorangegangenen Ansprüche, dadurch gekennzeichnet, daß die Nullpunkterkennungsschaltung (20) und die Impulserzeugerschaltung (30) je einen integrierten Schaltkreis (25 ; 35) umfaßt und daß der nichtinvertierende Eingang (21) des integrierten Schaltkreises (25) der Nullpunkterkennungsschaltung (20) mit einem bestimmten Anteil ($R_2,R_3$) der Wechselspannung des Heizstromkreises beaufschlagt wird, wohingegen der invertierende Eingang (22) auf Massepotential liegt, so daß beim Übergang der Wechselspannung vom negativen auf positives Potential, bezogen auf die Masse, d. h. also im Nulldurchgang, der Ausgang (23) dieses integrierten Schaltkreises (25) auf ein positives Signal springt und über einen nachgeschalteten Kondensator ($C_4$) auf den nichtinvertierenden Eingang (32) des integrierten Schaltkreises (35) der Impulserzeugerschaltung (30) übertragen wird, wodurch somit die vom integrierten Schaltkreises (35) dieser Impulserzeugerschaltung (30) mit dem Nulldurchgang der Wechselspannung synchronisiert sind.

## Claims

1. Circuit arrangement for controlling the operating temperature of the heating element (2) of an electrical soldering device, in particular a soldering iron, the heating element (2) being used as heating device and as measuring device for temperature control, characterized by that in the heating circuit of the heating element (2) being connected to an a. c. voltage, a measurement resistor (4 ; $R_{13}$) is provided for detecting the current flowing through the heating element (2), and that a TRIAC switching element (3) is connected between the measurement resistor

(4 ; $R_{13}$) and the heating element (2), that a variable-gain amplifier (40) equipped with an integrated circuit (45) for comparing the voltage drop ($U_4$) over the measurement resistor (4 ; $R_{13}$) to the reference voltage ($U_6$) of a voltage divider (6 ; $R_9,R_{10}$) is provided, that the voltage divider (6 ; $R_9,R_{10}$) is connected to a first output ($U_{10}$) of a rectifier (10) rectifying the a. c. voltage, and that the TRIAC switching element (3) is controlled by means of an integrated circuit (55) by a comparator circuit (50), the non-inverting input (51) of which being connected to a second output ($U_3$) of the rectifier (10), said output ($U_3$) delivering a reference voltage, and the inverting output (52) of which being connected to the output (43 ; $U_{40}$) of the variable-gain amplifier (40) and to the output (33) of a pulse generator (30), said pulse generator (30) generating pulses being synchronized over a zero-passage detection circuit (20) to the zero passages of the a. c. voltage, and that, as long as the output voltage ($U_{40}$) of the variable-gain amplifier (40) exceeds the reference voltage, the TRIAC switching element (3) remains conductive, otherwise only those pulses of the pulse generator (30) being necessary for the measurement of the activation threshold being transmitted to the control input of the TRIAC switching element 3.

2. Circuit arrangement according to claim 1, characterized by that when reaching or exceeding the reference voltage ($U_6$) by the voltage drop ($U_4$), an integrating capacitor ($C_5$) within the variable-gain amplifier (40) is loaded, the voltage ($U_{40}$) of said capacitor ($C_5$) controlling the comparator (50) in relation to a comparison voltage ($U_3$) such that the TRIAC switching element (3) is activated, as long as the voltage ($U_{40}$) at the output of the integrating capacitor ($C_5$) is greater than the reference voltage ($U_3$), and is de-activated, as long as the voltage ($U_{40}$) at the integrating capacitor ($C_5$) is smaller than the reference voltage ($U_3$).

3. Circuit arrangement according to claim 2, characterized by that the integrating capacitor ($C_5$) of the variable-gain amplifier (40) forms a timer element for re-heating the heating element (2) after deactivation of the TRIAC switching element (3).

4. Circuit arrangement according to one of the claims 2 and 3, characterized by that the reactivation of the TRIAC switching element (3) and, thus, another heating of the heating element (2) are only performed, when the voltage drop ($U_4$) at the measurement resistor (4 ; $R_{13}$) is greater than the reference voltage ($U_6$) at the voltage divider (6) and when the output voltage ($U_{40}$) of the integrating capacitor ($C_5$) exceeds the comparison voltage ($U_3$).

5. Circuit arrangement according to one or more of the preceding claims, characterized by that the voltage variations of the supply voltage ($U_0$) causing a modified current through the heating element (2) and, thus, a modified current and a voltage drop (4) over the measurement resistor (4 ; $R_{13}$) are compensated.

6. Circuit arrangement according to one of the preceding claims, characterized by that the zero-passage detection circuit and the pulse generator (30) comprise an integrated circuit (25 ; 35) each, and that the non-inverting input (21) of the integrated circuit (25) of the zero-passage detection circuit (20) is loaded with a specific portion ($R_2,R_3$) of the a. c. voltage of the heating circuit, whereas the inverting input (22) is connected to ground, such that when changing from negative to positive potential as compared to ground, i. e. with zero passage, the output (23) of said integrated circuit (25) changes to a positive signal and is transferred over a capacitor ($C_4$) connected in series to the non-inverting input (32) of the integrated circuit (35) of the pulse generator (30), whereby, thus, the pulses from the integrated circuit (35) of said pulse generator (30) are synchronized with the zero passages of the a. c. voltage.

## Revendications

1. Agencement d'un circuit pour la régulation de température de fonctionnement de l'élément chauffant (2) d'un appareil électrique de soudure, notamment d'un fer à souder, dans lequel l'élément chauffant (2) est utilisé comme élément de chauffage et comme élément de mesure pour la régulation de température, caractérisé en ce que sont introduits dans le circuit de courant de chauffage de l'élément chauffant (2), qui est soumis à une tension alternative : une résistance de mesure (4 ; $R_{13}$), pour contrôler le courant passant dans l'élément chauffant (2), et un élément de circuit TRIAC (3) entre la résistance de mesure (4 ; $R_{13}$) et l'élément chauffant (2), caractérisé en ce qu'un circuit amplificateur de régulation (45) pourvu d'un circuit de commutation intégré (45) est prévu pour la comparaison de la chute de tension ($U_4$) à la résistance de mesure (4 ; $R_{13}$) avec la tension de référence ($U_6$) d'un répartiteur de tension (6 ; $R_9,R_{10}$), en ce que le répartiteur de tension (6 ; $R_9,R_{10}$) est situé à une première sortie ($U_{10}$) d'un circuit redresseur (10) redressant la tension alternative, et en ce que l'élément de circuit TRIAC (3) est commandé par un circuit comparateur (50), au moyen d'un circuit de commutation (55) intégré, dont l'entrée non inversée (51) est reliée à une deuxième sortie ($U_3$) du circuit redresseur (10) délivrant une tension de comparaison et dont la sortie inversée (52) est reliée à la sortie (43,$U_{40}$) du circuit amplificateur de régulation (40), ainsi qu'avec la sortie (33) d'un circuit générateur d'impulsions (30), le circuit générateur d'impulsions produisant à cette occasion des impulsions qui sont synchronisées par un circuit de reconnaissance de point zéro (20) avec le passage à zéro de la tension alternative, et l'élément de circuit TRIAC (3) au moyen d'un circuit de commutation intégré (55) restant ouvert tant que la tension de sortie ($U_{40}$) de l'amplificateur de régulation (40) dépasse la tension de comparaison, autrement n'étant admises que les impulsions du circuit générateur d'impulsions (30) nécessitées pour la mesure du seuil d'enclenchement, pour l'entrée de commande de l'élément de circuit TRIAC (33).

2. Agencement d'un circuit selon la revendication 1, caractérisé en ce que lorsque l'on atteint, respectivement ou dépasse la tension de référence ($U_6$), un condensateur d'intégration ($C_5$) qui est situé dans le circuit amplificateur de tension (40) est chargé par la chute de tension ($U_4$) et dont la tension ($U_{40}$) commande le comparateur (50) en fonction d'une tension de comparaison ($U_3$), d'une manière telle que l'élément de circuit TRIAC (3) soit enclenché tant que la tension ($U_{40}$) à la sortie du condensateur d'intégration ($C_5$) est plus grande que la tension de comparaison ($U_3$), et déclenché tant que la tension ($U_{40}$) au condensateur d'intégration ($C_5$) est plus petite que la tension de comparaison ($U_3$).

3. Agencement d'un circuit selon la revendication 2, caractérisé en ce que le condensateur d'intégration ($C_5$) du circuit amplificateur de régulation (40) forme un circuit temporisateur pour le chauffage ultérieur de l'élément chauffant (2), après déclenchement de l'élément de circuit TRIAC (3).

4. Agencement d'un circuit selon l'une des revendications 2 et 3, caractérisé en ce que le réenclenchement de l'élément TRIAC (3) et ainsi un nouveau chauffage de l'élément chauffant (2) ne peut se produire que lorsque la chute de tension ($U_4$) à la résistance de mesure (4 ; $R_{13}$) est plus forte que la tension de référence ($U_{40}$) au répartiteur de tension (6) et que la tension de

sortie ($U_{40}$) du condensateur d'intégration ($C_5$) dépasse la tension de référence ($U_3$).

5. Agencement d'un circuit selon une ou plusieurs des revendications précédentes, caractérisé en ce que les variations de tension de la tension d'alimentation ($U_{10}$) sont compensées en ayant pour conséquence un courant modifié à travers l'élément chauffant (2), ayant pour suite un courant et une chute de tension modifiés ($U_4$) à la résistance de mesure (4 ; $R_{13}$).

6. Agencement d'un circuit selon l'une des revendications précédentes, caractérisé en ce que le circuit de reconnaissance de point zéro (20) et le circuit de génération d'impulsions (30) comprennent chacun un circuit intégré de commutation (25 ; 35) et que l'entrée non inversée (21) du circuit intégré de commutation (25) du circuit de reconnaissance de point zéro (20), sont soumis à une certaine partie ($R_2$, $R_3$) de la tension alternative du circuit de courant de chauffage, l'entrée inversée (22) étant par contre au potentiel de la masse, de sorte qu'à la transition de la tension alternative, du potentiel négatif au potentiel positif, relativement à la masse, c'est-à-dire ainsi au passage du point zéro, la sortie (23) de ce circuit de commutation intégré (25) passe rapidement à un signal positif et que le circuit générateur d'impulsions (30) transmette sur l'entrée non inversée (32) du circuit de commutation (35), à travers un condensateur ($C_4$) branché en aval, faisant ainsi qu'elle soit synchronisée avec le passage au zéro de la tension alternative, par le circuit de commutation (35) intégré de ce circuit générateur d'impulsions (30).

FIG. 7

0 102 315

FIG.2